# EUROPEAN PATENT APPLICATION

(11) **EP 2 377 627 A1**
(43) Date of publication of application: **19.10.2011**
(21) Application number: 11250298.4
(22) Date of filing: 11.03.2011
(51) Int. Cl.: B21C 1/22, B21C 37/15, F16L 9/02

(54) **A bimetallic tube, apparatus comprising such a tube and method of manufacturing an apparatus comprising a bimetallic tube**

(30) Priority: 15.03.2010 BR PI1002661
(71) Applicant: Bundy Refrigeraçao Brasil Industria E Comércio LTDA., Curitiba, PR (BR)
(72) Inventor: Okamoto, Hiroki, Sao Paulo (BR)
(74) Representative: Chapman, Paul Nicholas

(57) **Abstract**

A bimetallic tube (101) comprising a copper tube (103) and a steel tube (102) within the copper tube. The copper tube (103) is drawn down such that the inside wall surface (104) of the copper tube is in intimate contact with the outside wall surface (105) of the steel tube (102), and the copper tube is annealed. The invention further relates to an apparatus comprising such a tube and to a method of manufacturing an apparatus comprising a bimetallic tube img id="iaf01" file="imgaf001.tif" wi="174" he="189" img-content="drawing" img-format="tif"/>

## Description

### BACKGROUND OF THE INVENTION

### 1. Field of the Invention

The present invention relates to a bimetallic tube, apparatus comprising a bimetallic tube and a method of manufacturing an apparatus comprising a bimetallic tube.

### 2. Description of the Related Art

It is well known to use copper tubes within apparatuses such as refrigerators, freezers, air conditioning units, cookers, heating appliances, etc.. The reason for choosing to use copper may be due to one or more of its properties, such as its resistance to corrosion, its pliability, allowing it to be easily shaped, its high thermal conductivity, etc.. A problem with using such a copper tube is that copper has become very expensive. Consequently, in recent years it has been known to produce a bimetallic tube in which a copper plate layer is welded to the outside surface of a steel tube. Document CN 28881266 discloses such a bimetallic tube. A problem with such a tube relates to the complexity of manufacture due to the requirements of the welding process. In addition, if the weld between the inner surface of the copper and the outer surface of the steel is not perfectly formed, leakage of liquids or gasses between the steel and copper layers may occur.

### BRIEF SUMMARY OF THE INVENTION

According to a first aspect of the present invention, there is provided a bimetallic tube comprising: a copper tube; and a steel tube within the copper tube, characterised in that the copper tube is drawn down such that the inside wall surface of the copper tube is in intimate contact with the outside wall surface of the steel tube, and said copper tube is annealed.

According to a second aspect of the present invention, there is provided a method of manufacturing an apparatus comprising a bimetallic tube, said method comprising the steps of: providing a steel single walled tube; providing a straight copper tube; insertion of the steel tube within the copper tube to form a steel/copper composite tube; affixing the copper tube to the outside of the steel tube; and after the drawing process, annealing the composite tube within a furnace to reduce hardness of the composite tube, characterised in that the copper tube is affixed to the steel tube by a tube drawing process.

### BRIEF DESCRIPTION OF THE DRAWINGS

*Figure 1* shows a section of a bimetallic tube **101** embodying the present invention;
*Figure 2* shows a flow chart outlining a method of manufacturing the bimetallic tubing **101;**
*Figure 3* shows the step **205** of drawing the composite tube;
*Figures* 4*A* and *4B* show, respectively, the bimetallic tube **101** and a component **401** before coupling and after coupling by brazing;
*Figures 5A* and *5B* show, respectively, the bimetallic tube **101** and a component **501** before coupling and after coupling by a compression sealing device **551;**
*Figures 6A* and *6B* show, respectively, the bimetallic tube **101** and a component **601** before coupling and after coupling by a compression sealing device **651;**
*Figures 7A* and *7B* show, respectively, the bimetallic tube **101** and a component **701** before coupling and after coupling by brazing;
*Figure 8* shows a portion of an apparatus **801** comprising a length of the bimetallic tubing **101** connected to a first component **802** and to a second component **804;**
*Figure 9* shows a portion of an apparatus **901** comprising a length of the bimetallic tubing **101** connected to a first component **902** and to a second component **904;** and
*Figure 10* shows a heat exchanger **1001** comprising a suction tube **1002** formed of a length of bimetallic tube **101.**

### DETAILED DESCRIPTION OF EXAMPLE EMBODIMENTS

### Figure 1

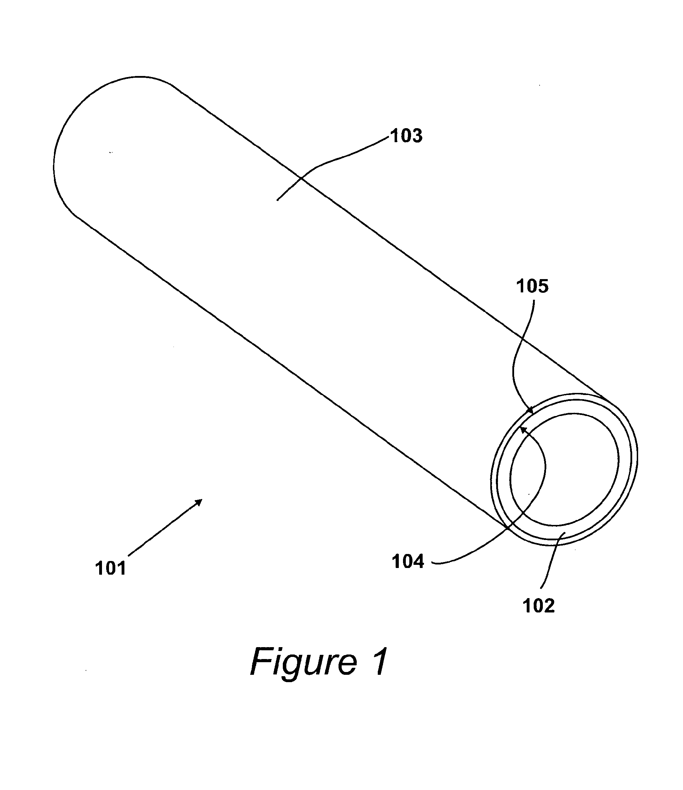

A section of a bimetallic tube **101** embodying the present invention is shown in *Figure 1**.* The bimetallic tube comprises a cylindrical steel tube **102** located within a copper tube **103** such that the inside surface **104** of the wall of the copper tube **103** is in contact with the outside surface **105** of the wall of the steel tube **102.** The inside wall surface **104** of the copper tube **103** is not adhered to the outside wall surface **105** of the steel tube **102** by any means such as brazing, other intermediate material such as adhesive, or by the copper tube being welded to the steel tube. However, the copper tube is tightly fitting over the steel tube so that the copper tube is maintained in position on the steel tube by frictional forces.

The choice of alloy from which the steel tube **102** is formed depends upon the application to which the tube is to be applied. However, in some embodiments the steel tube **102** is formed of a low carbon steel tube, having a carbon content of less than 0.03% by mass, and annealed to facilitate bending. In one such embodiment the steel tube has a relatively high titanium content as disclosed in European patent application number 05 784 561.2.

### Figure 2

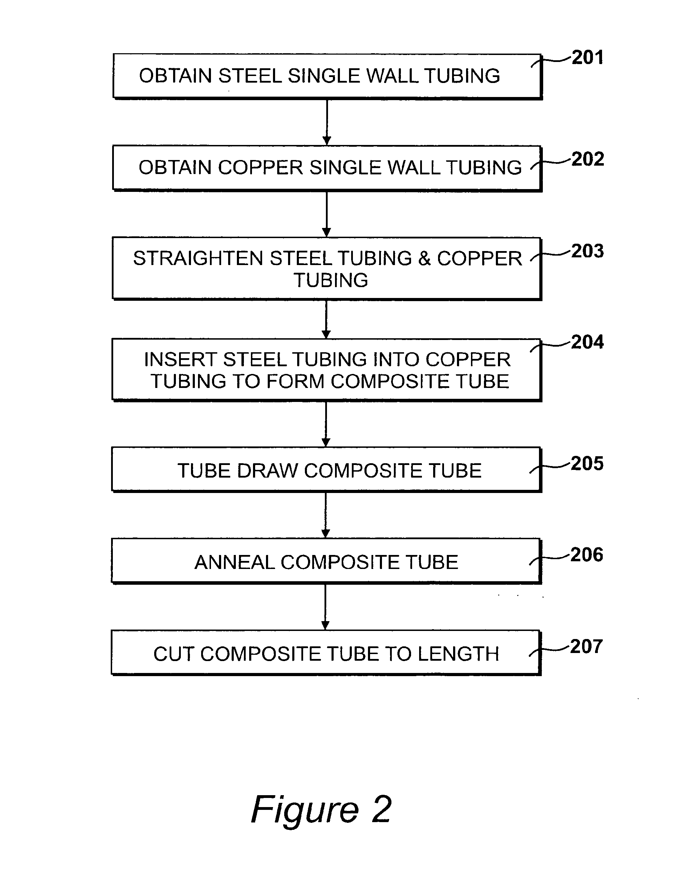

A method of manufacturing the bimetallic tubing **101** of *Figure 1* is shown in a flow chart in *Figure 2**.*

Firstly at steps **201** and **202,** steel single wall tubing and copper single wall tubing is obtained. The tubing obtained at steps **201** and **202** may be in the form of coils, in which case the tubing is straightened using known techniques at step **203.** If required, the straight copper and steel tubing is also cut to length, for example, so that it will be of a length that can be accommodated in the annealing furnace (at step **206**).

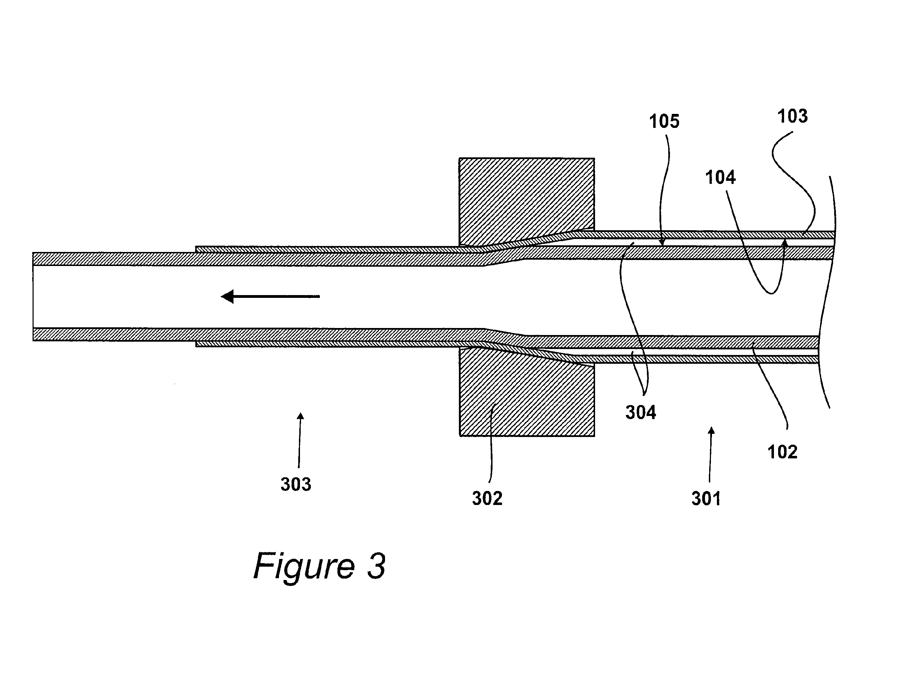

A length of straightened steel tubing is then inserted into straightened copper tubing, at step **204,** such that an extended length of the steel tubing is enclosed within the copper tubing to form a composite tube. The composite tube is then drawn, as will be further described below with reference to *Figure 3*, at step **205.** During the tube drawing process of step **205,** the copper tubing undergoes work hardening. Consequently, to make the finished composite tube pliable, the composite tube is annealed at step **206** before being cut to length at step **207.** Typically, the composite tubing is annealed at step **206** at a temperature of between 850°C and 950°C.

### Figure 3

The step **205** of drawing the composite tube is illustrated in *Figure 3* which shows a cross-sectional view of the copper tubing **103,** the steel tubing **102** and a die **302.** The process involves pulling the composite tubing **301** formed at step **204** through the die **302** to form the drawn composite tubing **303.**

As illustrated in *Figure 3*, initially there is a small gap **304** between the outside surface **105** of the steel tubing **102** and the inside wall surface **104** of the copper tubing **103.** This gap **304** facilitates the earlier insertion of the steel tubing into the copper tubing. However, as the composite tubing **301** is pulled through the die **302** the copper tubing diameter is reduced until the inside surface **104** of the copper tubing presses against the outside surface **105** of the steel tubing such that, depending upon the relative tubing diameters chosen, the steel tubing is also reduced in diameter.

In one example of the present embodiment, the copper tubing initially has an outside diameter of 7mm and an inside diameter of 6.6mm, while the steel tubing initially has an outside diameter of 6mm. After the tubing is drawn down, the copper tubing has an outside diameter of 6.0mm while the steel tubing has an outside diameter of 5.6mm and an inside diameter of 4.6mm.

### Figures 4A & 4B

Depending upon the application to which the tubing **101** is to be used, components may be connected to the tubing using a number of different methods. These methods fall into one of two categories depending upon the pressure of the fluid within the tubing **101** during its intended use. In all applications, and particularly where the fluid pressure within the tubing will be over 100 bar, the method of coupling the tubing to another component involves removal of an end portion of the copper tubing **103** adjacent to the end of the bimetallic tube **101.** Thus, an end portion of the steel tubing **102** extends beyond the corresponding end of the copper tubing **103,** typically by a distance of between 5mm and 20mm. For example, for a bimetallic tube of 8mm diameter, copper tubing **103** is removed to expose a minimum of 10mm of steel tubing **102.**

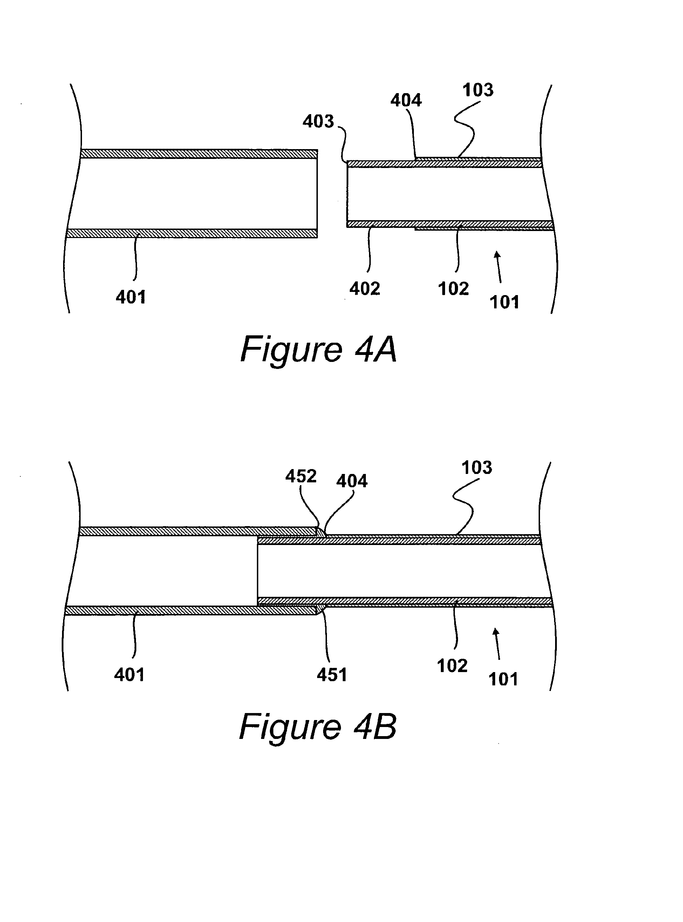

A first example of such a coupling between the bimetallic tube **101** and another component **401** is illustrated in the cross-sectional views of Figures 4A and *4B*. The bimetallic tube **101** and component **401** are shown before coupling in *Figure 4A* and after coupling by brazing in *Figure 4**B.*

In the present method, firstly an end portion of the copper tubing **103** is removed from the end **403** of the bimetallic tubing **101** such that an end portion **402** of the steel tubing **102** extends beyond the end **404** of the copper tubing **103,** as shown in *Figure 4A**.* In the present example, the bimetallic tubing **101** is to be connected to a component **401** in the form of a length of aluminium tubing having an inside diameter slightly larger than the outside diameter of the steel tubing **102.**

The end portion of the copper tubing may be removed in a peeling process in which the end of the copper tubing **404** is defined by cutting using a lathe, or cutting machine in which a knife rotates around the copper tube. As the copper tubing **103** is not adhered to the steel tubing **102** it may be simply peeled off the steel tubing.

Having exposed the end portion **402** of the steel tubing **102** it is then inserted into the end of the component **401** and, in this method, it is then brazed in place using brazing material **451** as shown in *Figure 4**B.* The brazed material extends along the interface between the inside surface of the component **401** and the outside surface of the end portion **402** of the steel tubing **102** to form a leak-tight seal between the component **401** and the steel tubing **102.** The brazed material **451** also extends between the end **452** of the component **401** and the end **404** of the copper tubing **103.** Consequently, the copper tubing **103,** the component **401** and the brazed material **451** protect the steel tubing **102** from the environmental conditions surrounding the joint between the bimetallic tube **101** and component **401.**

### Figures 5A & 5B

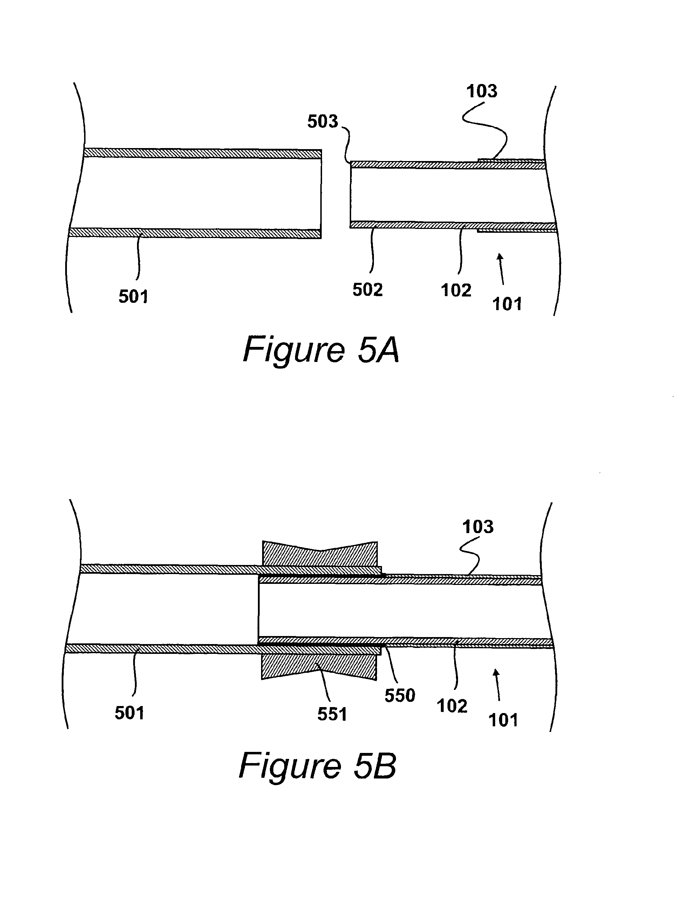

The bimetallic tubing **101** lends itself to connection with other tubing using compression seal devices such as those sold under the brand name Lokring. An example of such a connection is illustrated in the cross-sectional views of *Figures 5A* and *5B*.

Firstly as illustrated in *Figure 5A**,* an end portion of the copper tubing **103** is removed from the bimetallic tubing **101** to expose and end portion **502** of the steel tubing **102** adjacent to the end **503** of the bimetallic tubing. The length of the exposed portion **502** of the steel tubing is chosen to correspond to the length of the Lokring device **551** that is to be used.

In this example, the bimetallic tubing **101** is to be connected to a component **501** in the form of a length of aluminium tubing having an inside diameter slightly larger than the outside diameter of the steel tubing **102.**

Having exposed the end portion **502** of the steel tubing **102,** a sealing agent **550** is applied to the end portion **502.** In the present example, the device **551** used to connect the tube **101** with the component **501** is a Lokring single ring connector. Consequently, the sealing agent **550** is an adhesive containing a methacrylic ester as sold under the brand name Lokprep.

The steel tubing **102** is then located within the end of the aluminium tube **501** and the two tubes (**101** and **401**) are connected using the compression sealing device **551** employing known techniques. The component **501** is shown connected to the bimetallic tube **101** by the compression sealing device in *Figure 5**B.*

In the example of *Figures 5A* and *5B* the device made by Lokring is of a type in which two tubes of different diameters are connected. However, it will be understood that an alternative compression sealing device may be used that makes a first seal to a first tube and a second seal to a second tube. In this case the tubes are typically of the same diameter. A sealing device for forming a seal in this manner is also sold under the brand name Lokring.

### Figures 6A & 6B

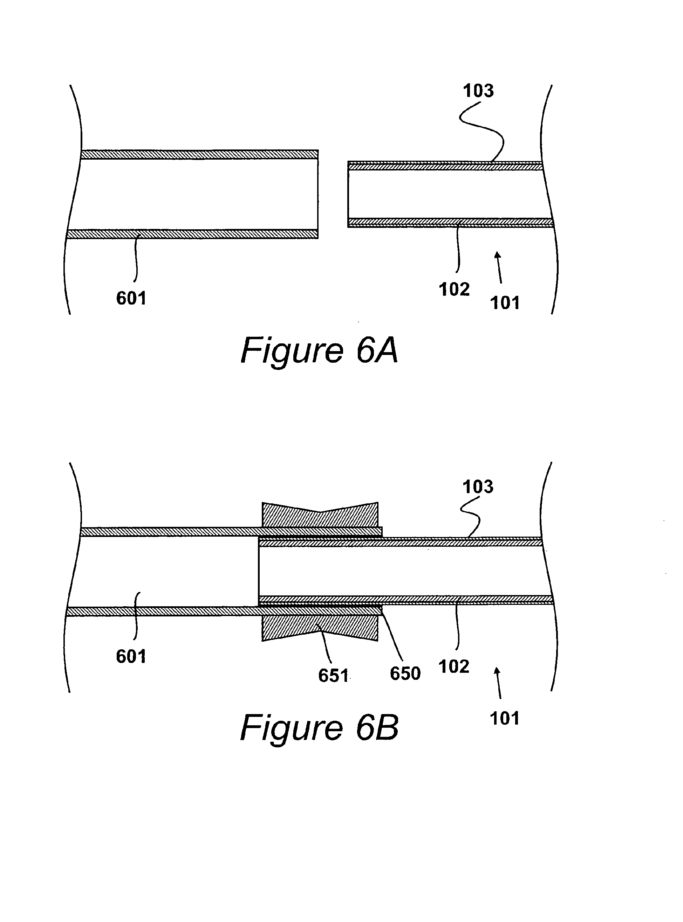

For applications where the bimetallic tubing is intended to contain fluid up to pressures of 100 bar, it has been found that the bimetallic tubing **101** may be connected to other components using methods in which the other component is connected to the outer copper tubing **103** of the bimetallic tubing **101.** An example of such a method is illustrated in the cross-sectional views of *Figures 6A* and *6B*. The bimetallic tube **101** and a component **601** are shown before coupling in *Figure 6A* and after coupling by a compression sealing device in *Figure 6**B.*

In this example, the bimetallic tubing **101** is to be connected to another component **601** in the form of metal tubing. Unlike the above described methods, this method does not require removal of the copper tubing **103** of the end portion of the steel tubing **102.** Thus, as illustrated in *Figure 6A**,* the complete bimetallic tubing **101** may be brought together with the component **601.** In the present method, the end portion of the bimetallic tube **101** is coated with sealing agent **650** and then inserted into the end of the tube **601.** The two tubes (**101** and **601**) are then connected together using a compression seal device **651** as illustrated in *Figure* 6B. In the present example, the compression seal device **651** is a single ring connector as sold under the brand name Lokring, and the sealing agent is an adhesive containing methacrylic ester. As shown in *Figure 6B*, the two tubes **101** and **601** are connected such that the outer surface of the copper tubing **103** is sealed against the inside surface of the tubing **601.**

### Figures 7A & 7B

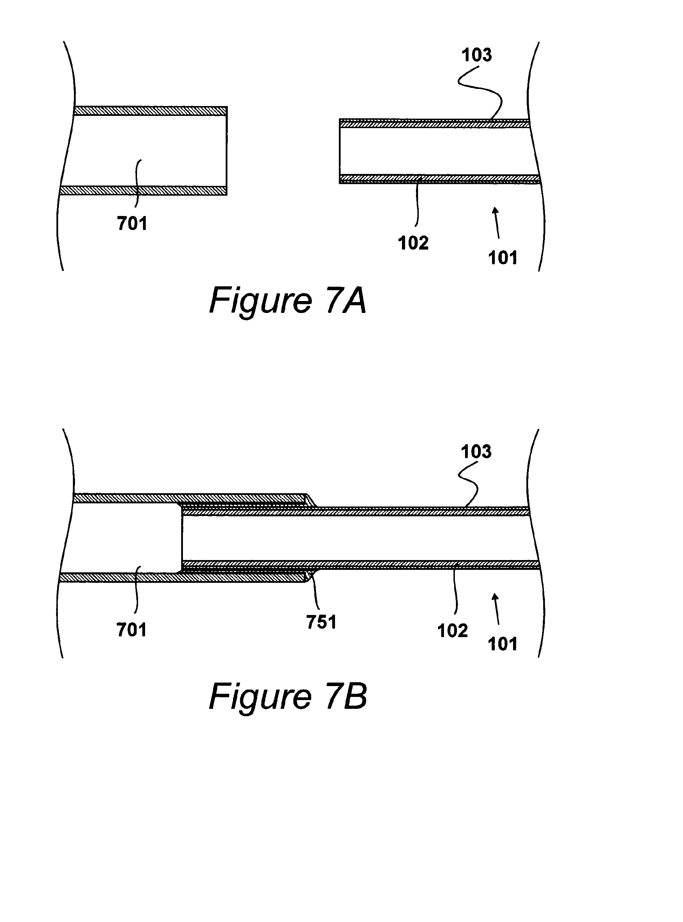

A second example of a method in which the bimetallic tubing **101** is connected to another component without any removal of the copper tubing **103** from the outer surface of the steel tubing **102** is shown in the cross-sectional views of *Figures 7A* and *7B*.

In the present method, the bimetallic tubing **101** is to be connected to a component **701** comprising metallic tubing. The inside diameter of the metallic tubing **701** is arranged to be slightly larger than the outside diameter of the bimetallic tube **101** such that an end portion of the bimetallic tubing **101** may be inserted into the end of the tubing **701** and brazed in place. Thus, as shown in *Figure 7B*, the bimetallic tubing **101** is connected to the component **701** by brazed material filling the gap between the inside surface of the component **701** and the outer surface of the copper tubing **103.** Thus, the brazed material **751** provides a leak-tight seal between the copper tubing **103** and the component **701.**

### Figure 8

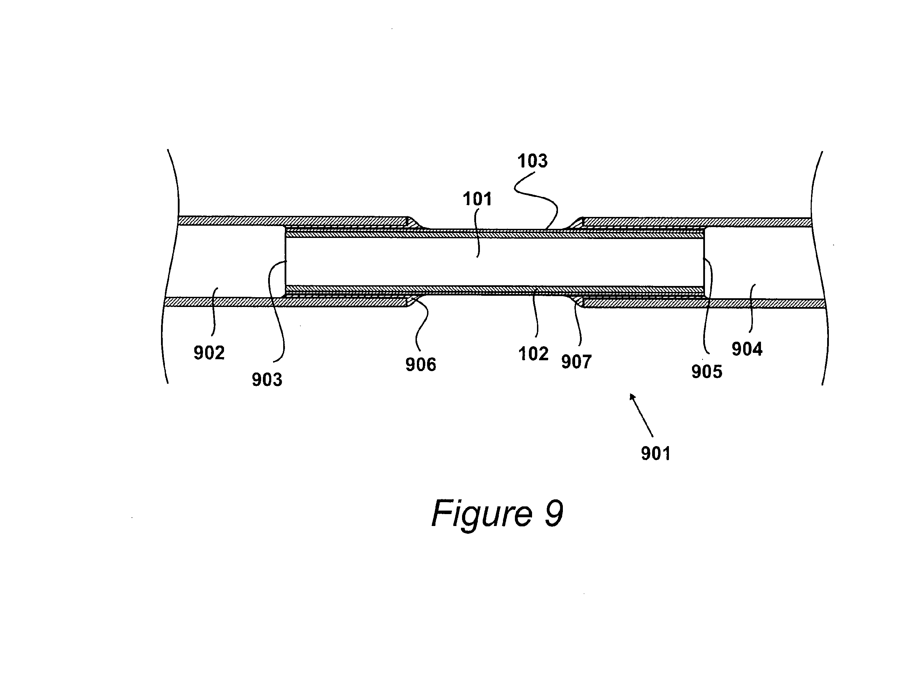

By way of example, a portion of an apparatus **801** is shown in *Figure 9* comprising a length of the bimetallic tubing **101** having a first component **802** connected to a first end **803** of the bimetallic tubing **101** and a second component **804** connected to the opposite end **805** of the tubing **101.**

In this example, end portions of the copper tubing **103** have been removed from the bimetallic tubing. Thus, the bimetallic tubing **101** is connected to the components **802** and **804** by braze joints **806** and **807** formed between the steel tubing **102** of the bimetallic tubing **101** and the components **802** and **804.** The component **802,** the steel tubing **102** and the second component **804** form a leak-tight conduit for fluid.

In this apparatus (**801**) the braze material **806** and **807** extends over the end portions of the steel tube **102** that have been stripped of their copper protective layer (copper tubing **103**) and provides the steel tube **102** with protection from the surrounding environment during use. For example, the braze material **606** and **807** prevents atmospheric oxygen and water from accessing the outer surface of the steel, and so prevents corrosion. For this reason, it is preferable for the braze to seal against the ends of the copper tubing **103.** However, this is not necessary for the components **802** and **804** along with the bimetallic tube **101** forming a leak-tight conduit for a fluid.

### Figure 9

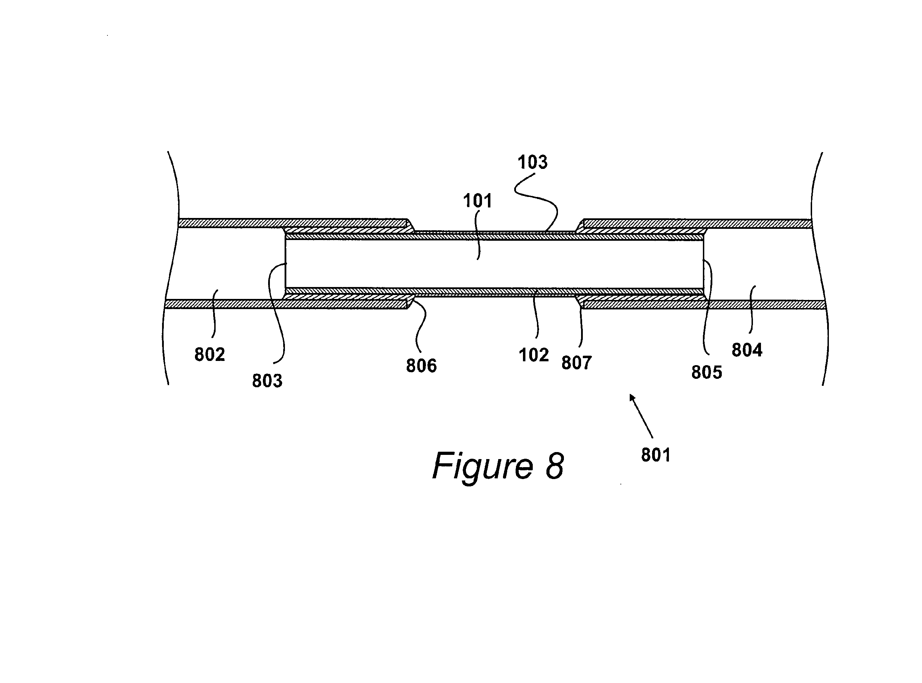

By way of example, a portion of an apparatus **901** is shown in *Figure 8* comprising a length of the bimetallic tubing **101** having a first component **902** connected to a first end **903** of the bimetallic tubing **101** and a second component **904** connected to the opposite end **905** of the tubing **101.** In this example, the bimetallic tubing **101** is connected to the components **902** and **904** by braze joints **906** and **907** formed between the copper tubing **103** of the bimetallic tubing **101** and the components **902** and **904.** Thus, the component **902,** the copper tubing **103** and the second component **904** form a leak-tight conduit for fluid.

It may be noted that the steel tube **102** is a tight fit within the copper tubing **103** but the outer surface of the steel tubing **102** is not adhered to the inner surface of the copper tubing **103.** Consequently, it is possible that fluid may enter into the interface between the steel tube **102** and the copper tubing **103,** but as both ends of this interface are maintained inside respective ones of the two components **902** and **904** no fluid is able to escape from the conduit formed by these three components. Thus, if any fluid is able to leak into the interface between the steel tubing **102** and the copper tubing **103,** this does not create a problem provided the components **902** and **904** are both sealed to the copper tubing **103.** So, in this embodiment, the copper tubing **103** provides the leak-tight conduit for fluid between components **902** and **904,** while the steel tubing **102** merely provides mechanical support for the copper tubing **103.**

### Figure 10

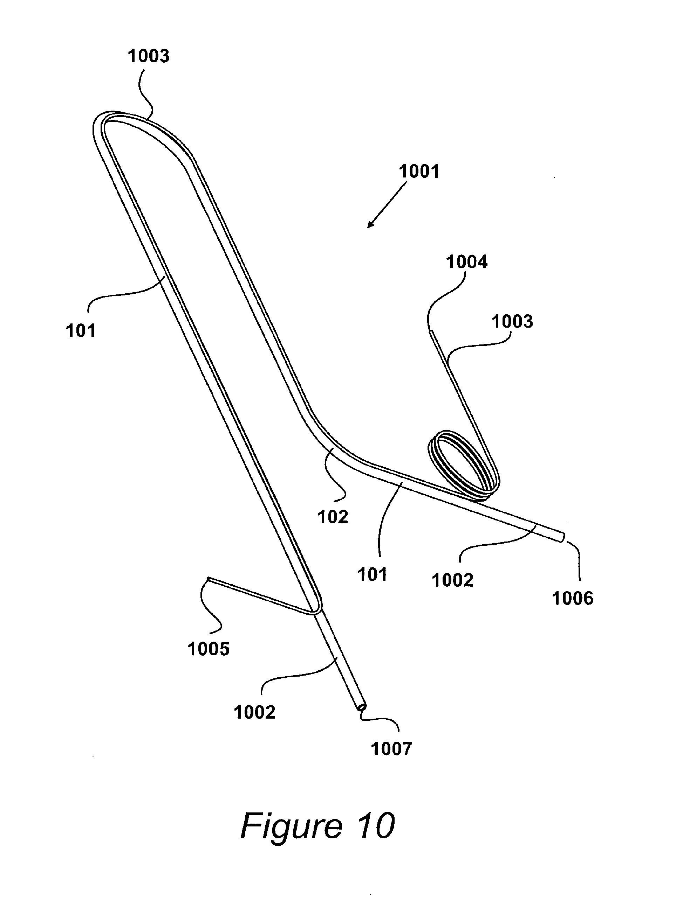

An example of apparatus **1001** employing the bimetallic tubing **101** is shown in *Figure 10**.*

The apparatus **1001** is a heat exchanger for use in a refrigeration unit and comprises a suction tube **1002** formed of a length of bimetallic tube **101** to which has been affixed, along a portion of its length, a copper capillary tube **1003.** (In the present example, the capillary tube **1003** is affixed to the copper tubing **103** of the suction tube **1002** by soldering.)

Typically, in use, one end **1004** of the capillary tube **1003** is connected to a condenser of a refrigeration system while the opposite end **1005** of the capillary tube is connected to the inlet of an evaporator of the refrigeration system. Typically, one end **1006** of the suction tube **1002** is connected to the compressor of the refrigeration system, while the opposite end **1007** of the suction tube **1002** is connected to the outlet of the evaporator via an accumulator.

As it will now be understood, the ends **1006** and **1007** of the suction tube may be connected to the relevant components of the refrigeration system using the above described methods. However, where connection is made to one end of the suction tube **1002** by sealing to the copper tube **103** forming its outer surface then the other end of the suction tube **1002** must also be connected by sealing to the copper tubing **103.** Alternatively, a portion of the suction tube **1002** at each of its ends **1006** and **1007** is stripped of its outer copper tubing layer (**103**) to expose a portion of steel tubing and the steel tubing **102** is then connected to the relevant components using a method such as those illustrated in *Figures 4A* and *4B* or *5A* and *5B*.

The apparatus **1001** of *Figure 10* is one example of the use of the bimetallic tubing **101,** but many other uses are envisaged. For example, other embodiments are envisaged in which the bimetallic tubing is used to carry refrigerant in a refrigeration or air conditioning system. In one such apparatus, the bimetallic tube **101** is formed into coils for use as an evaporator in a refrigeration unit. In other different embodiments the bimetallic tubing **101** is used to carry gas in a gas appliance, such as a cooker.

## Claims

1. A bimetallic tube (**101**) comprising:
a copper tube (**103**); and
a steel tube (**102**) within the copper tube;
**characterised in that** the copper tube (**103**) is drawn down such that the inside wall surface (**104**) of the copper tube is in intimate contact with the outside wall surface (**105**) of the steel tube (**102**), and
said copper tube is annealed.

2. The bimetallic tube of claim **1,** wherein the inside wall surface of said copper tube is not adhered to the outside wall surface of said steel tube.

3. The bimetallic tube of claim **1** or claim **2,** wherein said copper tube is maintained in position on said steel tube by frictional forces.

4. The bimetallic tube of any one of claims **1** to **3,** wherein said steel tube comprises a low carbon steel tube.

5. The bimetallic tube of claim **4,** wherein the steel tube comprises less than 0.03% by mass of carbon.

6. Apparatus comprising:
the bimetallic tube (**101**) of any one of claims **1** to **5;**
a first component (**902**) connected to a first end of said bimetallic tube;
and
a second component (**904**) connected to a second end of said bimetallic tube,
wherein said first component and said second component are connected to said bimetallic tube such that a fluid is transportable from said first component through said bimetallic tube to said second component, and said first and second components are joined to said copper tube by connection means providing a leak-tight seal for preventing leakage of fluid from said apparatus.

7. Apparatus comprising:
the bimetallic tube (**101**) of any one of claims **1** to **5**;
a component (**401**, **501**, **802**) connected to a first end of said bimetallic tube; and
wherein said component is connected to said bimetallic tube such that a fluid is transportable from said component through said tube, an end portion (**402**, **502**) of said steel tube (**102**) extends beyond the corresponding end (**404**) of the copper tube (**103**) and said component is joined to said steel tube by a connection means providing a leak-tight seal for preventing leakage of fluid from said apparatus.

8. Apparatus according to claim **7** wherein the connection means for connecting the component to the steel tube also provides a cover over said end portion of said steel tube to provide protection against corrosion.

9. Apparatus according to claim **7** or claim **8** wherein said connection means for connecting the component to the steel tube comprises braze material (**451**, **806**).

10. Apparatus according to any one of claims **7** to **9** wherein said means for connecting the component to the steel tube comprises a compression seal device (**551**).

11. Apparatus according to any one of claims **6** to **10** wherein said apparatus forms a part of larger apparatus selected from a group comprising:
a refrigeration apparatus; an air conditioning apparatus; cooking apparatus; and heating apparatus.

12. A method of manufacturing an apparatus comprising a bimetallic tube (**101**), said method comprising the steps of:
providing a steel single walled tube (**102**);
providing a straight copper tube (**103**);
insertion of the steel tube within the copper tube to form a steel/copper composite tube;
affixing the copper tube to the outside of the steel tube; and
after the affixing process, annealing the composite tube within a furnace to reduce hardness of the composite tube,
**characterised in that** the copper tube is affixed to the steel tube by a tube drawing process.

13. The method of manufacturing according to claim **12**, wherein said method comprises the further step of cutting the composite tube to a desired length after the step of annealing.

14. The method of manufacturing of according to claim **12** or claim **13**, further comprising the step of removing a portion of said copper tube adjacent to an end of said bimetallic tube to expose an end portion of said steel tube.

15. The method of manufacturing according to any one of claims **12** to **13**, further comprising the step of locating end portions of said composite tube within other components and sealing said other components to the copper tube of said composite tube to form a leak-tight conduit for fluid.
